# EUROPÄISCHE PATENTSCHRIFT

(11) **EP 1 990 470 B1**
(45) Veröffentlichungstag und Bekanntmachung des Hinweises auf die Patenterteilung: **21.06.2017**
(21) Anmeldenummer: 08003112.3
(22) Anmeldetag: 20.02.2008
(51) Int. Cl.: E01C 13/08, A01G 1/00

(54) **Als Vegetations- und Tragschicht für natürliche Sportrasen dienendes Einbaumaterial**
Material which serves as a layer of vegetation and substrate for natural grass playing surfaces
Matériaux de pose servant comme couche de végétation et de support pour un gazon sportif naturel

(30) Priorität: 10.05.2007 DE 102007022406
(43) Veröffentlichungstag der Anmeldung: 12.11.2008
(73) Patentinhaber: Firma H. Cordel u. Sohn, 54570 Salm (DE)
(72) Erfinder: Cordel, Jan, 54570 Wallenborn (DE)
(74) Vertreter: Strauss, Peter

(56) Entgegenhaltungen:
- EP-A1- 0 403 008
- EP-A1- 0 700 883
- US-A- 5 507 845

## Beschreibung

### Technisches Gebiet

Die Erfindung betrifft ein als Vegetations- und Tragschicht für natürliche Sportrasen dienendes Einbaumaterial, bestehend aus einem Gemisch von organischer Substanz, wie Oberboden (Mutterboden) und/oder Torf, und von Sand.

Bei bekannten Einbaumaterialien kommen als Sand Quarzsand (Silikasand) und Natursand zum Einsatz. Sie dienen der Abmagerung des Oberbodens und sorgen in Verbindung mit dem Oberboden u. a. für Formbeständigkeit, Tragfähigkeit und Wasserdurchlässigkeit einer daraus gebildeten Abdeckschicht über einem Planum (Unterbau).

Insoweit dient das bekannte Einbaumaterial zur Vorbereitung eines klassischen Naturrasens für sportliche Aktivitäten, beispielsweise unterschiedliche Arten von Ballspielen. Wegen seiner vielfältigen positiven Effekte hinsichtlich Spielfunktion, Erholungsfunktion, Landschaftsgestaltung, Erosionsschutz etc. gilt ein solcher Naturrasen als erstrebenswerter Standard, an dem alle anderen Sportbeläge gemessen werden. Als weitere Sportbeläge sind Kunststoffrasen in unverfüllter wie auch sandverfüllter bzw. gummi-/sandverfüllter Form sowie reine Tennenbeläge bekannt.

Wenn auch für den Naturrasen gilt, dass er durch Pflegemaßnahmen praktisch unbeschränkt regenerierbar ist, muss einschränkend gesagt werden, dass die Nutzungsintensität (Belastbarkeit) nicht beliebig gesteigert werden kann, sondern auch ausreichende Erholungsphasen vonnöten sind. Diese Umstände haben dazu geführt, dass Naturrasen und Kunstrasen nicht nur in Reinform angelegt werden, sondern auch in kombinierter Form existieren (als sogenannte Hybridrasen oder Kombinationsrasen).

So ist bspw. durch die WO 98/23817 folgender Aufbau bekannt. Auf einem Unterbau ist eine Basisschicht (Gewebe mit Gittermuster) ausgerollt, die implantierte Kunstrasenfasern in den Kreuzungspunkten aufweist. Auf die ausgerollte Basisschicht ist ein Wachstumssubstrat aufgebracht, und zwar in einer Stärke, welche die Kunstrasenfasern noch aus der Substratschicht herausragen lässt. Dieser Aufbau ist relativ aufwendig und kostenintensiv. Zwar wird hierbei eine Stabilisierung der Grasnarbe erreicht, jedoch ergibt sich infolge der (einheitlich) vertikalen Ausrichtung der Kunstrasenfasern nur eine beschränkte Stabilisierung des Wurzelwerks (Wurzelbereichs). Außerdem besteht die Gefahr, dass bei späteren Pflegemaßnahmen (wie Vertikutieren oder Aerifizieren) die systematisch angeordnete Struktur der Kunstrasenfasern teilweise zerstört wird.

Durch die WO 92/07142 ist es außerdem bekannt, in eine für einen Naturrasen hergerichtete Vegetationsschicht (Nährboden) in einem eigenen Arbeitsgang nachträglich einzelne Kunstrasenfasern einzubringen, und zwar maschinell in regelmäßigen Abständen. Dabei werden die Kunstrasenfasern schlaufen- oder V-förmig etwa 15 - 25 cm tief in den Nährboden versenkt, wonach sie sich nur noch zu etwa 5 - 10 % ihrer Länge oberhalb des Bodens erstrecken. Die Wahl der Materialien, die jeweilige Anordnung und Stärke werden in Abhängigkeit von der Belastungsintensität gewählt. Wie gesagt, handelt es sich um nachträgliche bzw. zusätzliche Maßnahmen, wodurch dieses System aufwendig und kostenintensiv ist. Auch hierfür gilt, dass eine Stabilisierung der Grasnarbe erreichbar ist, sich aber nur eine geringe Stabilisierung der Wurzelzone ergibt, weil wiederum die Kunstrasenfasern lediglich eine vertikale Ausrichtung besitzen und Wurzeln kaum einen Verankerungswiderstand bieten. Wie schon zuvor erläutert, besteht auch hierbei die Gefahr, dass bei späteren Pflegemaßnahmen die systematisch angeordnete Struktur der Fasern teilweise zerstört wird.

Aus der EP 0 403 008 A1 ist ferner eine Verstärkungsmatte zu entnehmen, auf der aufrechtstehendes künstliches Gras angeordnet ist, welches mit Unterstützung von natürlichem Gras verwurzelt werden soll, wobei so die negativen Effekte des Kunstgrases reduziert werden sollen. Diese Verstärkungsmatte enthält eine Gemischzusammensetzung mit organischen Substanzen und Lavasand mit einer Korngröße von 0-3mm, wobei Gummifasern beigemischt sind.

Die US 5 507 845 A offenbart demgegenüber eine Rollrasenmatte umfassend eine Rollrasenverstärkung, eine Schicht eines Pflanzmaterials auf der Rollrasenverstärkung, stabile diskrete Fasern, die im Pflanzenmaterials lose verteilt sind, tragfähige Pflanzen im Pflanzmaterial, welche ihren oberen Wurzelbereich im Pflanzmaterial und ihren unteren Wurzelbereich in der Rollenrasenverstärkung haben, wobei sich der obere Wurzelbereich zur Bildung eines Verstärkungsgewirrs mit den Fasern verschränkt und wobei der untere Wurzelbereich zur Anbindung der Pflanzenmaterialschicht und der Pflanzen an die Rollrasenverstärkung die Rollrasenverstärkung durchdringt und sich in ihr verschränkt. Dabei ist sowohl die Rollrasenverstärkung als auch das diskrete faserverstärkte Pflanzmaterial erforderlich, um die gewünschten Ausbreitungs- und Anwendungseigenschaften mit Blick auf den Erosionswiderstand erzielen zu können.

Einen anderen Weg schlägt dagegen die WO 94/18394 vor- Danach soll die Vegetationsschicht neben Sand, ein organisches wachstumsförderndes Medium und längliche synthetische Fasern enthalten, wobei die Fasern als separate einzelne Fasern ungeordnet in dem Material verteilt sind und eine Faserlänge von 5 mm - 75 mm haben. Als Sand soll insbesondere Silikasand oder ein mit Lehm (welcher durch Wasser aktiviert wurde) überzogener oder gebundener Sand Verwendung finden. Die Sandpartikel haben vorzugsweise einen durchschnittlichen Durchmesser im Bereich von 0,1 - 1,0 mm. Silikasand oder mit durch Wasser aktiviertem Lehm gebundener Sand soll vorzugsweise 50 - 95 Volumenprozent der Bestandteile der Vegetationsschicht ausmachen. Die Beimischung von synthetischen Fasern bestimmter Länge soll die Wurzelzone stabilisieren, wobei es in erster Linie um eine Stabilisierung des Sandes geht.

So wird angenommen, dass die ungeordnete Zufallsverteilung von Fasern eine Widerstandsfähigkeit gegen eine Partikelbewegung unter der Belastung durch Pferdehufe verleiht, wodurch eine Verbreiterung und ein Eindringen des Hufabdruckes derart minimiert wird, dass man eine sichere Auftrittsfläche erhält. Es soll also mit Hilfe einer ausreichenden Faserlänge ein "Verkettungs"-Effekt erzeugt werden, "wodurch verhütet wird, dass sich der Sand unter dem Druck der Pferdehufe, der Füße des Spielers oder anderer Nutzer, wie beispielsweise von mit Rädern versehenen Fahrzeugen oder Geräten bewegt." Folglich werden jenen Fasern bautechnische Eigenschaften wie verbesserte Scherfestigkeit und Stabilität zugeschrieben. Dazu wörtlich: "Die synthetischen Fasern wirken wie eine Masse aus verhältnismäßig unzerstörbaren Wurzeln und sorgen für eine verrottungssichere Struktur der Wurzelzone. Wir sind der Ansicht, dass die verteilten Fasern und nicht die Graswurzeln die Formänderung von Stößen und den Druck auf das System aufnehmen und verhüten, dass die Oberfläche aufbricht."

Die Ursächlichkeit eines solchen Effektes braucht hier nicht näher überdacht zu werden, sondern kann vielmehr dahingestellt bleiben. Der vorliegenden Erfindung geht es nämlich um ein anderes Anliegen. Bereits bei den beiden vorgenannten Fundstellen wurde gerügt, dass keine befriedigende Stabilisierung des Wurzelbereichs im Sinne einer Erhöhung des Ausziehwiderstandes erfolgt. Solches trifft auch für den zuletzt besprochenen Fall zu. So wird darin u.a. die Forderung gestellt, es müssten verhältnismäßig gerade Fasern verwendet werden. Damit im Einklang steht die verhältnismäßig geringe Länge der Fasern, denn je kürzer eine Faser ist, desto eher wird sie der Forderung entsprechen, geradlinig zu sein. Ist eine gerade Faser nach oben gerichtet und steht über die Oberfläche über, kann sie die Grundnarbe verstärken und stabilisieren. Dagegen besitzt sie keinen nennenswerten Ausziehwiderstand in Bezug auf die Vegetationsschicht und bietet damit Wurzeln auch keinen Verankerungswiderstand. Verläuft dagegen eine Faser innerhalb der Vegetationsschicht horizontal, bietet sie einen optimalen Verankerungswiderstand für eine Wurzel, trägt aber nicht zur Stabilisierung der Grasnarbe bei.

### Darstellung der Erfindung

Hier setzt nun die Erfindung an. Sie will Einbaumaterial, welches aus einem Gemisch von organischer Substanz, wie Oberboden und/oder Torf, und von Sand besteht und als Vegetations- und Tragschicht für natürliche Sportrasen dient, dahingehend verbessern, dass sowohl eine Stabilisierung der Grasnarbe als auch des Wurzelbereichs ermöglicht wird.

Gelöst werden kann diese anspruchsvolle Aufgabe mit den Merkmalen des Anspruchs 1. Zweckmäßige Weiterbildungen geben die Unteransprüche an.

Die Verwendung von Lavasand bringt für die Praxis gleich mehrere technische Vorteile mit sich. Bekanntlich handelt es sich bei Lava um ein poröses Eruptivgestein, welches scher- und lagefest eingebaut werden kann und dabei sowohl wasserdurchlässig als auch wasserspeicherfähig ist. Da es in klassifizierter und natürlich oder technisch abgerundeter Form zum Einsatz kommen soll, ist eine problemlose Durchmischung möglich, d.h. eine vollständige Durchmischung bei Schonung der Fasern. Die relativ große Länge der Fasern sorgt zum einen dafür, dass Fasern nicht nur im Bereich der Vegetationsschicht verbleiben, sondern auch darüber hinaus ragen. Zum anderen kommt es zwangläufig zu einem Abknicken oder zur Richtungsänderung (auch mehrfach) und ergibt sich daraus für Wurzeln die Möglichkeit einer Umschlingung und ein stärkerer Ausziehwiderstand. Im übrigen sorgt auch der in Berührung mit den Kunstrasenfasern stehende Lavasand mit seiner rauen Oberfläche für einen hohen Ausziehwiderstand.

Die mit der Erfindung erzielbare Stabilisierung sowohl der Grasnarbe als auch des Wurzelbereichs bedeuten im Ergebnis eine Erhöhung der Bespielbarkeit (Nutzungsintensität) eine Minderung der Unterhaltungskosten wie auch eine Verbesserung der Sportfunktionalität.

Als besonders vorteilhaft muss auch angesehen werden, dass das Einbaumaterial nach dem Mischen seiner Bestandteile lose zur Baustelle transportiert und dort erdfeucht in üblicher Weise eingebaut werden kann, wobei es keiner zusätzlichen Maßnahmen bedarf. Das gilt erst recht, wenn nach einem weiteren Vorschlag auch das Saatgut für den Naturrasen bereits werkseitig beigemischt ist.

Die Erfindung lässt sich auf praktisch alle Rasenflächen anwenden, welche Belastungen durch Menschen oder Tiere ausgesetzt sind, also alle möglichen Ballspielanlagen, Pferderennbahnen, Turnieranlagen, American Football Camps, Golfanlagen u. ä.

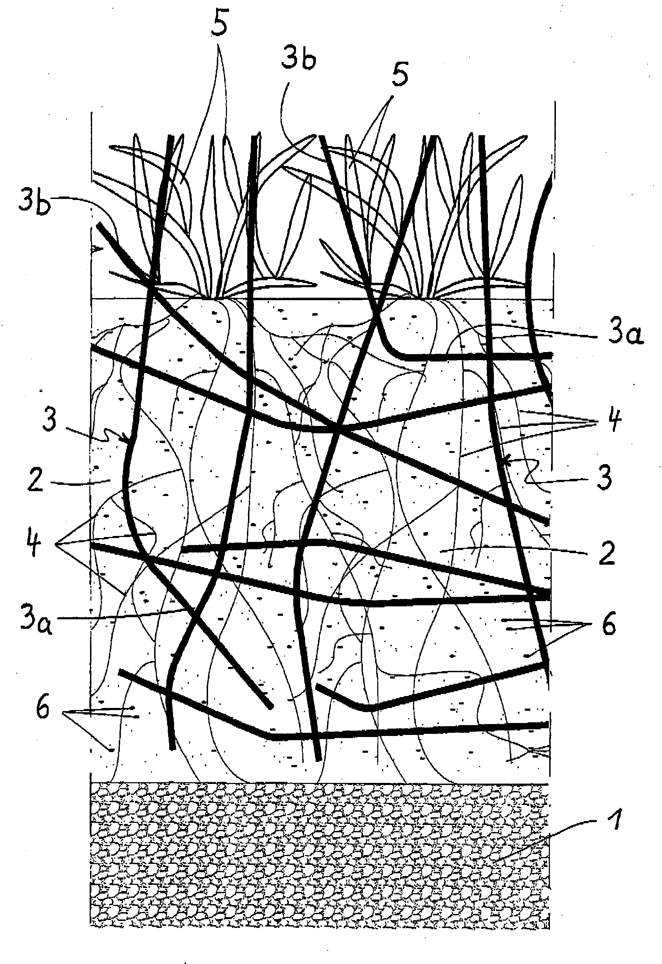

### Kurze Beschreibung der Zeichnung

Weitere Einzelheiten und Vorteile der Erfindung werden nachfolgend in Verbindung mit der Zeichnung für ein bevorzugtes Ausführungsbeispiel beschrieben. Darin zeigt die einzige Figur einen mit dem erfindungsgemäßen Einbaumaterial gestalteten Sportbelag im Schnitt.

Auf einem planierten und verdichteten Untergrund oder Planum 1 ist eine Vegetations- und Tragschicht 2 aus einem erfindungsgemäßen Einbaumaterial aufgebracht, d.h. eingebaut. Der Einbau erfolgte ursprünglich in erdfeuchtem Zustand des Einbaumaterials. Er beschränkt sich grundsätzlich auf nur wenige Arbeitsschritte, nämlich die Anfuhr, die Verteilung und oberflächliche Glättung des Einbaumaterials sowie ein abschließendes Abwalzen.

Danach verbleiben einzelne Kunstrasenfasern 3 in loser Zufallsverteilung in der verdichteten Vegetations- und Tragschicht 2, und zwar mit einem Abschnitt 3a Mit diesem Abschnitt 3a unterhalb der Oberfläche der Vegetations- und Tragschicht 2 findet die Kunstrasenfaser 3 zunächst selbst Halt, der umso größer ist, je mehr der Verlauf des Abschnittes 3a von einer Geraden abweicht bzw. je mehr ein solcher Abschnitt insgesamt von einer Vertikalen abweicht. Damit liefert der Abschnitt 3a gleichzeitig Angriffs- oder Verankerungspunkte für die Wurzeln 4 von Naturrasenpflanzen 5, welche sich aus beigemischtem Saatgut 6 der Vegetations- und Tragschicht 2 entwickeln.

Die Kunstrasenfasern 3 verfügen in der Mehrzahl auch über Abschnitte 3b, welche über die Oberfläche der Vegetations- und Tragschicht 2 überstehen, ähnlich den Naturrasenpflanzen 5. Mit diesen können sie auf eine gewünschte Rasenhöhe gekürzt werden. Mit ihrem Abschnitt 3b verstärken die Kunstrasenfasern 3 die von den Naturrasenpflanzen 5 gebildete Grasnarbe. Die Abschnitte 3a der Kunstrasenfasern 3 verstärken dagegen den Wurzelbereich der Naturrasenpflanzen 5, indem sie ihnen Verankerungspunkte von hohem Ausziehwiderstand bieten. Natürlich wirkt sich ein hoher Ausziehwiderstand auch günstig auf die Abschnitte 3b und deren Schutzfunktion für die Grasnarbe aus.

Die Gesamtlänge der Kunstrasenfasern 3 setzt sich aus den Teillängen der Abschnitte 3a und 3b zusammen und verteilt sich mehr oder weniger zufällig. Bei einem Längenspektrum zwischen insgesamt 12 cm und 23 cm konnte jedoch gefunden werden, dass ein hoher Anteil an Kunstrasenfasern 3 ausreichend in der Vegetations- und Tragschicht 2 verankert bleibt und längere Abschnitte 3b ohne Gefahr eines Ausziehens gekürzt (geschnitten) werden können, sodass insgesamt eine zufriedenstellende Stabilisierung von Wurzelbereich und Grasnarbe erfolgt.

### Bezugszeichenliste

- 1: Untergrund, Planum
- 2: Vegetations- und Tragschicht
- 3: Kunstrasenfasern
- 3a: Abschnitt einer Kunstrasenfaser (in der Vegetations- und Tragschicht)
- 3b: Abschnitt einer Kunstrasenfaser (oberhalb der Vegetations- und Tragschicht)
- 4: Wurzel
- 5: Naturrasenpflanze
- 6: Saatgut

## Patentansprüche

1. Gemischzusammensetzung eines Einbaumaterials für eine Vegetations- und Tragschicht (2) für natürliche Sportrasen, bestehend aus einer losen Mischung
a) organischer Substanzen, wie Oberboden und/oder Torf, und
b) Sand mit folgenden Merkmalen: als Sand ist Lavasand gewählt, und zwar als Siebfraktion 0/3 mm ungebrochen oder gebrochen und anschließend abgerundet; der Volumenanteil des Lavasandes beträgt etwa 20 - 45 %;
c) der Gemischzusammensetzung sind Kunstrasenfasern (3) in einer Länge von mindestens 12 cm bis maximal 23 cm lose beigemischt.

2. Gemischzusammensetzung nach Anspruch 1, **dadurch gekennzeichnet, dass** die Kunstrasenfasern (3) aus grün eingefärbtem Polyethylen (PE) und/oder Polyamid (PA) und/oder Polypropylen (PP) bestehen.

3. Gemischtzusammensetzung nach einem der Ansprüche 1 oder 2, **dadurch gekennzeichnet, dass** ihm Saatgut (6) für den Naturrasen beigemischt ist.

4. Gemischzusammensetzung nach einem der Ansprüche 1 bis 3, **dadurch gekennzeichnet, dass** es zusätzlich Natursand und/oder Quarzsand bis zu einem Volumenanteil von 40% enthält.

5. Vegetations- und Tragschicht (2) für natürlichen Sportrasen umfassen eine Gemischzusammensetzung mit den Merkmalen des Anspruchs 1, wobei die Länge der Kunstrasenfasern (3) etwa dem 1,5-fachen Wert der Einbauhöhe der Vegetations- und Tragschicht (2) entspricht.

6. Vegetations- und Tragschicht (2) für einen natürlichen Sportrasen, bestehend aus einem Gemischzusammensetzung, entsprechend einem der Patentansprüche 1 - 5, wobei die Kunstrasenfasern über die Vegetationsschicht hinausragen.

## Claims

1. Mixture composition of an installation material for a vegetation and substrate layer (2) for natural sports turfs, consisting of a loose mixture of
a) organic substances such as topsoil and/or peat, and
b) sand having the following characteristics: lava sand is selected as the sand, this being as a 0/3 mm screen fraction broken or unbroken and then rounded off; the percentage of lava sand by volume is approximately 20-45%;
c) artificial turf fibres (3) in a length of at least 12 cm to at most 23 cm are added loose to the mixture composition.

2. Mixture composition according to claim 1, **characterised in that** the synthetic turf fibres (3) are made of polyethylene (PE) and/or polyamide (PA) and/or polypropylene (PP) dyed green.

3. Mixture composition according to one of claims 1 or 2, **characterised in that** seed (6) for the natural turf is added to it.

4. Mixture composition according to one of claims 1 to 3, **characterised in that** in addition it contains natural sand and/or quartz sand up to a percentage of 40% by volume.

5. Vegetation and substrate layer (2) for natural sports turfs comprising a mixture composition having the characteristics of claim 1, wherein the length of the artificial turf fibres (3) approximately corresponds to 1.5 times the installation height of the vegetation and substrate layer (2).

6. Vegetation and substrate layer (2) for a natural sports turf, consisting of a mixture composition, corresponding to one of claims 1-5, wherein the artificial turf fibres protrude beyond the vegetation layer.

## Revendications

1. Composition de mélange d'un matériau de pose destiné à servir de couche végétale et de couche support (2) à des gazons naturels pour terrains de sport, constituée d'un mélange en vrac :
a) des substances organiques, telle que de la couche superficielle de sol et/ou de la tourbe, et,
b) du sable, avec les caractéristiques suivantes : sable de lave choisi en tant que sable, et à savoir, en non concassé ou alors concassé puis arrondi de façon à présenter une classe granulométrique de 03 mm ; la proportion en volume de sable de lave est de l'ordre de 20 à 45 %,
c) des fibres de gazon artificielles (3), d'une longueur d'au moins 12 cm jusqu'à 23 cm maximum, sont ajoutées en vrac à la composition de mélange.

2. Composition de mélange selon la revendication 1, **caractérisée en ce que** les fibres de gazon artificielles (3) sont constituées de polyéthylène (PE) et/ou de polyamide (PA) et/ou de polypropylène (PP), de couleur verte.

3. Composition de mélange selon l'une des revendications 1 ou 2, **caractérisée en ce que** lui est ajoutée de la semence (6) pour gazon naturel.

4. Composition de mélange selon l'une des revendications 1 à 3, **caractérisée en ce qu'**elle contient, en plus, du sable naturel et/ou du sable de quartz, avec une proportion en volume de 40 %.

5. Couche végétale et couche support (2) pour des gazons naturels destinés aux terrains de sport, comprenant une composition de mélange avec les caractéristiques de la revendication 1, la longueur des fibres de gazon artificiels (3) correspondant à peu près à la valeur de 1,5 fois la hauteur de pose des couche végétale et couche support (2).

6. Couche végétale et couche support (2) pour un gazon naturel destiné à des terrains de sport, constituées d'une composition de mélange, selon l'une des revendications 1 à 5, les fibres de gazon artificielles dépassant au-delà de la couche de végétation.
